# EUROPÄISCHE PATENTSCHRIFT

(11) **EP 3 126 449 B1**
(45) Veröffentlichungstag und Bekanntmachung des Hinweises auf die Patenterteilung: **25.11.2020**
(21) Anmeldenummer: 15712371.2
(22) Anmeldetag: 26.03.2015
(51) Int. Cl.: C08L 77/06, C08L 77/02, C08J 5/04, C08J 5/18, B29C 43/18, B29C 70/40, B29C 70/46, B29C 70/50

(54) **POLYMERZUSAMMENSETZUNG, FASERVERBUNDHALBZEUG UND VERFAHREN ZUR HERSTELLUNG DESSELBEN**
POLYMER COMPOSITION, FIBRE-COMPOSITE SEMI-FINISHED PRODUCT AND METHOD FOR THE PRODUCTION THEREOF
COMPOSITION POLYMÈRE, DEMI-PRODUIT COMPOSITE RENFORCÉ DE FIBRES ET PROCÉDÉ DE PRODUCTION

(30) Priorität: 31.03.2014 DE 102014104513
(43) Veröffentlichungstag der Anmeldung: 08.02.2017
(73) Patentinhaber: Volkswagen AG, 38440 Wolfsburg (DE); Evonik Operations GmbH, 45128 Essen (DE)
(72) Erfinder: KLEMT, Christian, 38527 Meine (DE); HUNGER, René, 38550 Isenbüttel (DE); LEHMANN, Kathrin, 51377 Leverkusen (DE)
(74) Vertreter: Gulde & Partner
(86) Internationale Anmeldenummer: PCT/EP2015/056543
(87) Internationale Veröffentlichungsnummer: WO 2015/150214

(56) Entgegenhaltungen:
- WO-A1-2013/168453
- DE-A1- 4 104 692
- US-A1- 2002 091 205
- "Reactive & Non-Reactive Modified Silicone Fluid Reactive Silicone Fluids 2-6 Non-Reactive Silicone Fluids 7-9 Storage & Handling Precautions 9", , 19. Juli 2006 (2006-07-19), XP055157027, Gefunden im Internet: URL:http://www.shinetsusilicones.com/files /Modified Fluids Brochure (website).pdf [gefunden am 2014-12-05]
- "Silicones for Resin Modification", SILICONE REVIEW, Januar 2011 (2011-01), XP055192224, Gefunden im Internet: URL:http://www.shinetsusilicone-global.com /catalog/pdf/ResinModification_e.pdf>

## Beschreibung

Die Erfindung betrifft eine Polymerzusammensetzung sowie ein Faserverbundhalbzeug, dessen Oberfläche zumindest teilweise aus der Polymerzusammensetzung geformt ist. Ferner betrifft die Erfindung ein dazugehöriges Herstellungsverfahren für das Faserverbundhalbzeug.

Auf vielen Gebieten der Technik werden mittlerweile Faserverbundwerkstoffe zur Verbesserung der Bauteileigenschaften und insbesondere Gewichtsreduzierung eingesetzt. Der Faserverbundwerkstoff weist dabei zumindest zwei Hauptkomponenten auf, nämlich eine Matrix und in diese Matrix eingebettete, der Verstärkung dienende Fasern. Für die Zwecke der vorliegenden Erfindung sind lediglich Faserverbundwerkstoffe mit polymerer Matrix von Interesse. Die Kombination derartiger Faserverbundwerkstoffe mit weiteren Materialien, insbesondere Metallen, ist insbesondere im Fahrzeugbau ein Ansatzpunkt der Entwicklung neuer Leichtbautechnologien. Dabei entsteht das besondere Problem der hinreichenden Anbindung des Faserverbundwerkstoffs an das Metall. Die Herstellung eines Kunststoff-Metall-Hybridbauteils aus einem metallischen Grundkörper und einem mit dem Grundkörper verbundenen Faserverbundhalbzeug aus einem Faserverbundwerkstoff mit polymerer Matrix bedarf demnach der Entwicklung spezifischer Fügeverfahren.

Gängige Fügeverfahren umfassen beispielsweise das mechanische Fügen von Faserverbundhalbzeug und metallischen Bauteilen mit Nieten, durch Kragenfügen oder Bolzensetzen. Weiterhin kann die Verbindung zwischen Faserverbundhalbzeug und metallischen Bauteil auch über ein Klebeverfahren erfolgen. Klassische Klebeverfahren haben jedoch den Nachteil, dass in zusätzlichen Arbeitsschritten ein Klebstoff aufgetragen und ausgehärtet werden muss, was eine Automatisierung erschwert. Ferner müssen die Materialeigenschaften des Klebstoffs so beschaffen sein, dass er einerseits zum Faserverbundwerkstoff und andererseits zum metallischen Bauteil eine hinreichend hohe Haftkraft entwickelt. Darüber hinaus sollte der Klebstoff auch in seinem sonstigen mechanischen Verhalten so ausgelegt sein, dass die Vorteile des Verbunds auch tatsächlich zum Tragen kommen können. Mittlerweile wurden spezielle Schmelzklebstoffe entwickelt, die eine Anbindung von Metallen an Polymeren erlauben. Beispielsweise beschreibt EP 2 435 246 B1 einen solchen Schmelzklebstoff auf Copolyamid-Basis, der eine stoffschlüssige Anbindung an die metallische Oberfläche über Isocyanat- und Epoxid-Funktionalitäten ermöglicht. Dennoch zeigen die bekannten stoffschlüssigen Fügeverfahren unter Zuhilfenahme von Klebstoffen die zuvor angesprochenen Nachteile im Verfahrensablauf, die einer verstärkten Automatisierung entgegenstehen. Insbesondere sind keine geeigneten Haftvermittler für das prozessintegrative Fügen im Pressverfahren für die Verbindung von Polymerwerkstoffen mit Metallen bekannt.

US 2002/091205 A1 und WO 2013/168453 A1 offenbaren spezielle Mischungen von terminal glycidyl-substituierten Siloxanen mit Polyamiden. Diese Siloxane zeichnen sich dadurch aus, dass sie einen sehr hohen Siloxananteil aufweisen. Derartige Siloxane weisen als Additiv zur Haftvermittlung den Nachteil auf, dass sehr wenige reaktive Funktionalitäten zur Haftvermittlung zur Verfügung stehen.

DE 4104692 A1 betrifft Verbundwerkstoffe mit thermoplastischer Matrix und flächigen Gebilden aus Verstärkungsfasern.

Ein oder mehrere der geschilderten Nachteile des Standes der Technik lassen sich mit Hilfe der erfindungsgemäßen Polymerzusammensetzung beheben oder zumindest lindern. Dazu enthält die Polymerzusammensetzung
a) 100 Gewichtsteile eines Polyamids;
b) 0,5 bis 20 Gewichtsteile eines oder mehrerer haftvermittelnder Additive der Formel (I):

   MₐM'_{b}D_{c}D'_{d} (I)

   mit
   - M =: [R₃SiO_{1/2}]
   - M' =: [R'R₂SiO_{1/2}]
   - D=: [R₂SiO_{2/2}]
   - D' =: [R'RSiO_{2/2}]
   wobei jedes R unabhängig voneinander für Methyl oder Phenyl steht und
   R' ein Glycidyloxypropyl-Rest der Formel (II) ist 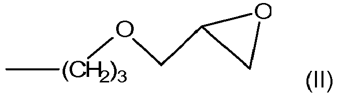 und wobei für die Indizes gilt
   a = 0 bis 2
   b = 0 bis 2
   c = 15 bis 100
   d = 0 bis 50
   a + b = 2 und
   b + d ≥ 2.

Ein Verhältnis der Summe der Indizes a + c zur Summe der Indizes b + d liegt dabei im Bereich von 4 bis 20. Für ein Faserverbundhalbzeug auf Basis von Polyamid gemäß Anspruch 9, ein dazugehöriges Herstellungsverfahren gemäß Anspruch 12 sowie eine Folie gemäß Anspruch 10, die die Polymerzusammensetzung enthält, gilt für Index c: c = 10 bis 500 und das Verhältnis der Summe der Indizes a + c zur Summe der Indizes b + d liegt nur vorzugsweise im Bereich von 4 bis 20.

Die Polymerzusammensetzung beinhaltet demgemäß zumindest zwei Komponenten, nämlich ein Polyamid und ein in das Polyamid eingebrachtes Additiv (oder eine Mischung von Additiven), das im späteren Einsatzzweck eine stoffschlüssige Anbindung an die Oberfläche eines Metallbauteils über seine reaktive Epoxid-Gruppe ermöglicht. Dieses haftvermittelnde Additiv - ein funktionalisiertes Polysiloxan - lässt sich dabei ohne Weiteres und mit gängigen Verfahren in die Polyamidbasis einarbeiten. Das Additiv fungiert im Anwendungsfall als Haftvermittler. Es verändert dabei die mechanischen, thermischen und rheologischen Eigenschaften des Polyamids nur marginal.

Bei zu geringer Additivkonzentration ist die Haftwirkung nicht mehr ausreichend. Zu hohe Additivkonzentration haben dagegen eine negative Auswirkung auf die mechanischen, thermischen und rheologischen Eigenschaften des Polymers (Viskosität steigt an, Wärmeausdehnungskoeffizient nimmt zu, Selbstvernetzung des Additivs, Agglomeratbildung). Besonders bevorzugt ist, wenn die Polymerzusammensetzung 0,3 bis 10 Gewichtsteile, insbesondere bevorzugt 0,5 bis 5 Gewichtsteile des haftvermittelnden Additivs enthält.

Gemäß einer bevorzugten Variante steht R für Methyl. Hierdurch ergibt sich zum einen ein Kostenvorteil in der Herstellung und zum anderen ist die Verarbeitung des Additivs mit dem Polyamid aufgrund der gegenüber phenylsubstituieren Additiven verringerten Schmelz- und Glasübergangstemperaturen vereinfacht.

Ferner ist bevorzugt, wenn ein Verhältnis der Summe der Indizes a + c zur Summe der Indizes b + d im Bereich von 5 bis 15 liegt. Das angegebene Verhältnis der nicht-funktionalisierten Siloxaneinheiten, also der Methyl- und/oder Phenylreste aufweisenden Polysiloxaneinheiten zu den Polysiloxaneinheiten, die den Glycidyloxypropyl-Rest der Formel (II) tragen, hat sich bei der Herstellung von Kunststoff-Metall-Hybridbauteilen als besonders geeignet herausgestellt. Ein zu geringer Anteil des Rests der Formel (II) führt zu einer nicht hinreichenden stoffschlüssigen Anbindung an die Oberfläche des metallischen Grundkörpers. Zu hohe Anteile erschweren dagegen die Verarbeitung des Additivs zur Polymerzusammensetzung und die Synthese dieser Additive ist wesentlich aufwendiger. Bevorzugt ist weiterhin, dass für Index c gilt: c = 20 bis 50. Für den Fall, dass b = 2 ist, gilt für Index d vorzugsweise: d = 0 bis 20, insbesondere d = 1 bis 10. Für den Fall, dass b = 0 ist, gilt für Index d vorzugsweise: d = 2 bis 20, insbesondere d = 3 bis 10. Mit den genannten Festlegungen lassen sich die Eigenschaften des Additivs mit Hinsicht auf die Polyamidmatrix und spätere Weiterverarbeitung der Polymerzusammensetzung, zum Beispiel zu einer Folie, optimieren.

Die Glycidyloxypropyl-Reste der Formel (II) können im Additiv der Formel (I) statistisch verteilt vorliegen. Statistische Verteilungen sind blockweise aufgebaut mit einer beliebigen Anzahl an Blöcken, die einer beliebigen Sequenz aufeinander folgen oder sie können eine randomisierten Verteilung bilden, sie können auch alternierend aufgebaut sein oder auch über die Kette des Polymers einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Polyether modifizierte Siloxane als haftvermittelnde Additive der Formel (I) können durch edelmetallkatalysierte Hydrosilylierung von Allylglycidylether (1-Allyloxy-2,3-epoxypropan; CAS Nummer 106-92-3) mit Wasserstoffsiloxanen der Formel (III)

MₐM'_{b}D_{c}D'_{d} (III)

mit
- M =: [R₃SiO_{1/2}]
- M' =: [HR₂SiO_{1/2}]
- D=: [R₂SiO_{2/2}]
- D' =: [HRSiO_{2/2}]
wobei jedes R unabhängig voneinander für Methyl oder Phenyl steht und wobei für die Indizes gilt
a = 0 bis 2
b = 0 bis 2
c = 10 bis 500
d = 0 bis 50
a + b = 2 und
b + d ≥ 2,
wie beispielsweise in Beispiel 4 der EP 1 520 870 A1 beschrieben, hergestellt werden.

Die bei der Herstellung der Polyether modifizierten Siloxane verwendeten Wasserstoffsiloxane der Formel (III) können wiederum wie im Stand der Technik, beispielsweise in EP 1 439 200 A1 beschrieben, hergestellt werden.

Das Polyamid der erfindungsgemäßen Polymerzusammensetzung ist vorzugsweise ausgewählt aus der Gruppe umfassend Polyamid 6 (PA6), Polyamid 12 (PA12) und Polyamid 6,6 (PA6,6). Insbesondere ist das Polyamid Polyamid 6. Das haftvermittelnde Additiv ist speziell für den Einsatz in Polyamiden entwickelt worden. Das Additiv lässt sich hervorragend mit Polyamiden, insbesondere Polyamid 6, verarbeiten, ohne dass es zu einer Entmischung oder unerwünschten Reaktion zwischen Additiv und Polymer kommt. Die haftvermittelnden Additive sind vorzugsweise migrationsfähig in der polymeren Matrix auf Basis von Polyamid. Bevorzugt reagieren die Additive nicht mit der polymeren Matrix. Besonders bevorzugt sind die haftvermittelnden Additive in polymerer Matrix migrationsfähig und reagieren nicht mit der polymeren Matrix.

Die Polymerzusammensetzung kann neben dem Polyamid und dem haftvermittelnden Additiv noch weitere Zusatzstoffe enthalten. Diese zusätzlichen Additive dienen beispielsweise der besseren Verarbeitung der Polymerzusammensetzung, Farbgebung oder Einstellung sonstiger Materialeigenschaften. Vorzugsweise weist die Polymerzusammensetzung kumulativ 0 bis 100 Gewichtsteile, insbesondere 0 bis 20 Gewichtsteile derartiger zusätzlicher Additive auf. Bevorzugt enthalten die erfindungsgemäßen Zusammensetzungen keine formstabilisierenden Fasern.

Bevorzugt weisen die erfindungsgemäßen Zusammensetzungen mindestens 50 Gew.-%, bevorzugt mindestens 60 Gew.-%, 70 Gew.-%, 80 Gew.-%, 90 Gew.-%, 95 Gew.-% und insbesondere mindestens 99,999 Gew.-% einer Mischung von Polyamid mit haftvermittelndem Additiv der Formel (I) auf, wobei der Anteil des haftvermittelnden Additives bevorzugt 0,5 bis 5 Gew.-% und besonders bevorzugt 1 bis 3 Gew.-% bezogen auf die Gesamtzusammensetzung beträgt.

Die Polymerzusammensetzung wird aus den einzelnen Bestandteilen vorzugsweise durch Schmelzmischen in einem knetenden Aggregat hergestellt. Das haftvermittelnde Additiv und gegebenenfalls weitere Zusatzstoffe können jeweils für sich oder zusammen als Mischung direkt dem Polyamid-Granulat oder der Polyamid-Schmelze zugegeben werden. Gegebenenfalls wird die Polymerzusammensetzung aus den einzelnen Komponenten erst kurz vor der Weiterverarbeitung erzeugt, zum Beispiel in einem Extruder einer Anlage zur Folienerzeugung. Die Komponenten können ebenso als Mischung in Form eines Masterbatches zugegeben werden.

Die verwendeten haftvermittelnden Additive, die im allgemeinen eine Viskosität zwischen 10 und 10.000 mPas aufweisen, können entweder mit einer Flüssigdosierung dem Polyamid bei der Herstellung der Polymerzusammensetzung zugesetzt werden oder die Additive werden als Masterbatch in fester Form bereitgestellt. Letzteres ist bevorzugt, da die Verarbeitung flüssiger Komponenten in Extrudern besonders bei Konzentrationen oberhalb von 10% technisch nur aufwendig realisierbar ist.

Für die Herstellung von Folien aus der erfindungsgemäßen Polymerzusammensetzung kommen unterschiedlichen Verfahren in Frage:
Bei Gießverfahren wird die Polymerzusammensetzung im Extruder (meist Einschneckenextruder) verflüssigt und über eine Breitschlitzdüse auf eine laufende und wassergekühlte Walze gegossen, wodurch bei hoher Produktionsgeschwindigkeit Folien mit Schichtdicken von 10 bis 600 µm herstellbar sind.

Beim Blasfolienverfahren wird das Extrudat ebenfalls im Extruder verflüssigt (meist Einschneckenextruder) und durch ein ringförmige vertikale Düse mit Hilfe eines Luftstroms eine Schmelzschlauch der Polymerzusammensetzung erzeugt, die dann im Luftstrom abgekühlt wird. Die üblichen Schichtdicken liegen zwischen 10 und 500 µm.

Die erfindungsgemäßen Folien weisen eine Dicke von 10 µm bis 600 µm, bevorzugt von 15 µm bis 500 µm, weiter bevorzugt von 20 µm bis 400 µm, mehr bevorzugt von 30 µm bis 300 µm, weiter mehr bevorzugt von 50 µm bis 200 µm und insbesondere bevorzugt von 75 bis 150 µm auf. Die Dicke der Folien kann nach dem Stand der Technik mit unterschiedlichen Methoden bestimmt werden, zum Beispiel auf mechanische Weise mit Hilfe von Mikrometerschrauben oder auf optischem Wege mit Hilfe von Interferenzmessungen. Bevorzugt wird die Dicke der erfindungsgemäßen Folien mit Hilfe von Mikrometerschrauben, bevorzugt mit Mikrometerschrauben der Firma Mituyo, besonders bevorzugt der Bauart Bügelmessschraube, insbesondere bevorzugt mit einer Schließkraft der Schraube von 7 bis 9 Newton bestimmt. Bei der beanspruchten Schließkraft ist eine Verletzung der Folie ausgeschlossen, wodurch eine hohe Reproduzierbarkeit der Messwerte gewährleistet wird.

Erfindungsgemäße Folien weisen bevorzugt Anreicherungszonen der haftvermittelnden Additive nach Formel (I) an der Grenzschicht auf. Mit anderen Worten, die Folie weist an ihrer Grenzfläche beiderseitig je eine Zone (oder Schicht) auf, in der das haftvermittelnde Additiv der Formel (I) angereichert ist.

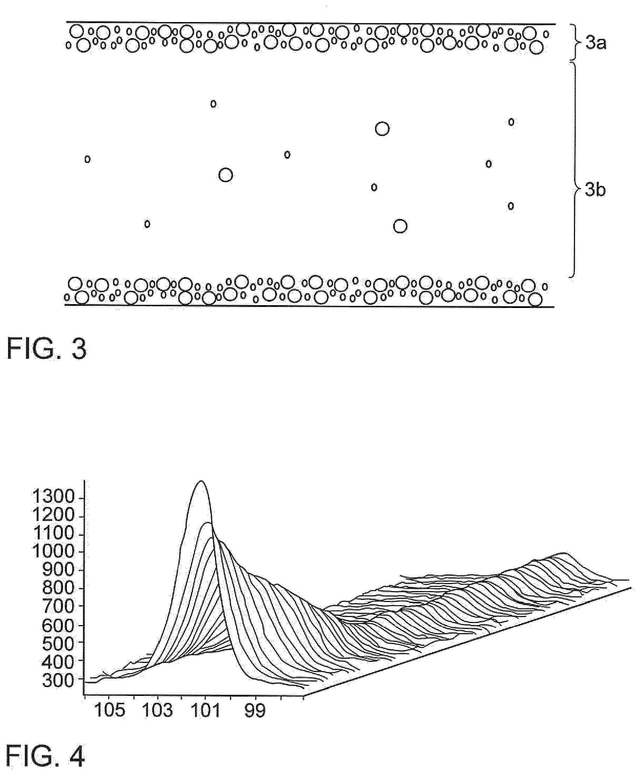

Die Konzentration der haftvermittelnden Additive ist damit in den Anreicherungszonen (3a) gegenüber dem Bulk (3b) der Folie erhöht, wie dies schematisch in Figur 3 dargestellt ist. Die Bestimmung derartiger Anreicherungszonen wird mit Hilfe von x-ray photoelectron spectroscopy (XPS) durchgeführt. Diese Methode ermöglicht eine elementabhängige Konzentrationsbestimmung in Oberflächenschichten. Im Ergebnis erhält man ein Konzentrations-Tiefen-Profil des Elementes Silizium, wie in Figur 4 dargestellt.
Folien mit Anreicherungszonen sind besonders vorteilhaft, da die Konzentration des haftvermittelnden Additives als kostentreibende Komponente der Folie auf diese Weise gesenkt werden kann.

Bevorzugt ist die Konzentration der haftvermittelnden Additive in den Anreicherungszonen mindestens 3 mal, bevorzugt mindestens 4 mal, weiter bevorzugt mindestens 5 mal, mehr bevorzugt mindestens 6 mal, weiter mehr bevorzugt mindestens 7 mal, 8 mal, 9 mal und insbesondere mindestens 10 mal gegenüber dem Bulk erhöht.

Bevorzugt weisen die erfindungsgemäßen Folien Anreicherungszonen mit einer Schichtdicke von 0,1 bis 4000 nm, bevorzugt von 0,5 bis 400 nm, weiter bevorzugt von 1 bis 100 nm, mehr bevorzugt von 2 bis 50 nm, besonders bevorzugt von 2,5 bis 20 nm und insbesondere bevorzugt von 3 bis 10 nm auf.

Besonders bevorzugt weisen die erfindungsgemäßen Folien Anreicherungszonen mit einer Schichtdicke von 2 bis 50 nm auf, wobei diese mittels Röntgenphotoelektronen-Spektroskopie (x-ray photoelectron spectroscopy (XPS) bestimmt wurde.

Insbesondere bevorzugt sind Folien mit einer Dicke der Anreicherungszone von 2 bis 20 nm und mit einer Anreicherungskonzentration, die mindestens 5 mal gegenüber der Bulkkonzentration erhöht ist.

Die erfindungsgemäßen Folien müssen nicht notwendigerweise klar sein, vielmehr ist es möglich, dass sie trübe oder opak erscheinen. Diese optischen Eigenschaften sind kein Qualitätskriterium.

Bevorzugt enthält die Folie, insbesondere die Anreicherungszonen der Folie, keine formstabilisierenden Fasern.

Mit beiden zuvor genannten Verfahren können auch Mehrschichtfolien gefertigt werden. Hier besteht zumindest eine der äußeren Schichten der Mehrschichtfolie aus der erfindungsgemäßen Polymerzusammensetzung. Es sind also beispielsweise Schichtdickenformationen in folgender Art und Weise darstellbar:
1. Schicht = erfindungsgemäße Polymerzusammensetzung bestehend aus einem Polyamid und mindestens einem haftvermittelnden Additiv
2. Schicht = Polyamid ohne haftvermittelndes Additiv
3. Schicht = erfindungsgemäße Polymerzusammensetzung bestehend aus einem Polyamid und mindestens einem haftvermittelnden Additiv

Aus dem additivierten Polyamid der erfindungsgemäßen Polymerzusammensetzung kann unter Anwendung bekannter Verfahren (zum Beispiel Schmelz-, Folien- oder Pulverimprägnierung im Doppelbandpressverfahren, Intervallheißpressen) ein Faserverbundhalbzeug hergestellt werden.

Das Faserverbundhalbzeug besteht dabei zumindest aus einer Schicht der erfindungsgemäßen Zusammensetzung und einer Schicht, welche formstabilisierende Fasern enthält. Formstabilisierende Fasern sind Einzelfasern oder Faserverbünde, die zu Geweben oder Schichten mit unterschiedlicher Ausrichtung der Fasern verarbeitet sein können, dies kann zum Beispiel durch Wicklung von Einzelfasern oder Fasersträngen, wie zum Beispiel Faserbündeln geschehen. Die formstabilisierenden Fasern sind bevorzugt Kunststoff-, Kohlenstoff- oder Glasfasern, besonders bevorzugt Glasfasern.

Die Fasern sind in Polyamid, bevorzugt von PA6, PA6,6 oder PA12, insbesondere bevorzugt von PA6 eingeschlossen.

Ein weiterer Aspekt der Erfindung betrifft ein Faserverbundhalbzeug auf Basis von Polyamiden, bei dem zumindest ein Teil der Oberfläche des Halbzeugs aus der zuvor beschriebenen Polymerzusammensetzung geformt ist. Das erfindungsgemäße Faserverbundhalbzeug zeichnet sich demnach dadurch aus, dass wenigsten bereichsweise die Oberfläche aus der Polymerzusammensetzung besteht.

Dabei ist es ausreichend, wenn das Halbzeug nur an den Oberflächenbereichen, die eine stoffschlüssige Anbindung an ein metallisches Bauteil darstellen sollen, mit dem additivierten Polyamid beschichtet sind. Das Additiv muss demnach weder im gesamten Volumen des Faserverbundhalbzeugs noch im gesamten oberflächennahen Bereich vorhanden sein.

Besonders bevorzugt sind erfindungsgemäße Faserverbundhalbzeuge, die aus einer erfindungsgemäßen Folie und einer Schicht des faserverstärktem Polyamids bestehen. Mehr bevorzugt sind Faserverbundhalbzeuge, in denen die Schicht des faserverstärkten Polyamids eine Dicke von 0,5 bis 10 mm, bevorzugt von 0,7 bis 7 mm, weiter bevorzugt von 1,0 bis 5 mm, besonders bevorzugt von 1,2 bis 3 mm und insbesondere von 1,4 bis 2 mm aufweist.

Dieses Faserverbundhalbzeug kann im Weiteren mittels Thermoplastpressen auf ein metallisches Halbzeug aufgepresst beziehungsweise eingeformt werden. Unter Einwirkung von Druck und Temperatur bildet sich während des Pressens eine kovalente chemische Bindung zwischen dem additivierten Polyamid und der Metalloberfläche aus.

Schließlich richtet sich ein weiterer Aspekt der Erfindung auf ein Verfahren zur Herstellung eines solchen Faserverbundhalbzeugs. Das Verfahren umfasst die Schritte:
a) Bereitstellen der erfindungsgemäßen Polymerzusammensetzung;
b) Herstellen einer Folie aus der Polymerzusammensetzung; und
c) Verarbeiten der Folie im Fertigungsprozess des Faserverbundhalbzeugs nach dem Film-Stacking-Verfahren oder dem Schmelze-Direkt-Verfahren oder durch Kaschieren.

Prinzipiell ist auch ein Direktauftrag der erfindungsgemäßen Polymerzusammensetzung auf einen bereits vorgefertigten Rohling des Faserverbundhalbzeugs denkbar, zum Beispiel durch ein modifiziertes Spritzgussverfahren. Eine ergonomisch besonders effektive Herstellungsvariante sieht jedoch vor, dass zunächst aus der erfindungsgemäßen Polymerzusammensetzung eine Folie gefertigt wird (Schritt b). Hierbei kann Rückgriff auf bekannte Verfahren zur Folienherstellung genommen werden, wie dem Foliengießverfahren (zum Beispiel dem Castverfahren) oder dem Folienblasverfahren. Die Folie hat vorzugsweise eine Foliendicke im Bereich von 10 bis 600µm, mehr bevorzugt von 30 bis 300µm und insbesondere bevorzugt von 50 bis 150µm. Die erfindungsgemäße Polymerzusammensetzung eignet sich hervorragend zur Folienherstellung.

Im Schritt c) des Verfahrens wird die Folie weiterverarbeitet zum Faserverbundhalbzeug. Nach einer Variante kann die Folie dabei durch Kaschieren direkt auf einen Rohling des Faserverbundhalbzeugs aufgetragen werden. Besonders bevorzugt ist jedoch die Verarbeitung der Folie im sogenannten Film-Stacking-Verfahren und Schmelze-Direkt-Verfahren. Beim Film-Stacking-Verfahren werden dabei übereinandergelegte Bahnen aus Fasermaterial und polymerem Matrixmaterial kontinuierlich einem beheizten Werkzeug, der sogenannten Imprägnierstrecke, zugeführt und thermisch verschmolzen. Zumindest eine der beiden äußeren Bahnen ist dabei eine Folie, die aus der erfindungsgemäßen Polymerzusammensetzung hergestellt wurde. Auch beim sogenannten Schmelze-Direkt-Verfahren ist zumindest eine der außenliegenden Bahnen eine Folie der erfindungsgemäßen Polymerzusammensetzung. Die polymere Polyamid-Matrix, die letztendlich die Fasern umgibt, wird bei dieser Verfahrensvariante als Schmelze direkt in das temperierte Werkzeug der Imprägnierstrecke eingebracht.

Bevorzugt erfolgt das Verarbeiten der Folie im Fertigungsprozess des Faserverbundhalbzeugs durch Kaschieren.

Zur Herstellung des endfertigen Faserverbundhalbzeugs schließen sich gegebenenfalls weitere Prozessteilschnitte, wie Konfektionierung, optional Vorformung und dergleichen an. Das endfertige Faserverbundhalbzeug wird dann zur Herstellung eines Kunststoff-Metall-Hybridbauteils verwendet. Der metallische Grundkörper eines derartigen Hybridbauteils wird dabei stoffschlüssig mithilfe des haftvermittelnden Additivs an das Faserverbundhalbzeug gebunden.

Ein weiterer Aspekt der Erfindung betrifft ein Faserverbundhalbzeug, das gemäß dem vorab beschriebenen Verfahren erhältlich ist.

Weitere bevorzugte Ausgestaltungen der Erfindung ergeben sich aus den übrigen, in den Unteransprüchen genannten Merkmalen sowie der nachfolgenden Beschreibung.

Die Erfindung wird nachfolgend anhand von Ausführungsbeispielen und den dazugehörigen Zeichnungen näher erläutert. Es zeigen:
- Figur 1: eine schematische Darstellung des Aufbaus eines nach dem Film-Stacking-Verfahren hergestellten Faserverbundhalbzeugs;
- Figur 2: eine schematische Darstellung des Aufbaus eines nach dem Schmelze-Direkt-Verfahren hergestellten Faserverbundhalbzeugs;
- Figur 3: Schematische dargestellte Verteilung des haftvermittelnden Additives über den Querschnitt einer erfindungsgemäßen Folie; und
- Figur 4: XMS Messung einer Folie zur Bestimmung der Siliziumkonzentration in Abhängigkeit von der Entfernung zu Oberfläche. Jede Linie entspricht einer zunehmenden Tiefe von 0,2 nm, die höchste Konzentration wurde in der Oberfläche gefunden.

Die erfindungsgemäßen Polymerzusammensetzungen, die erfindungsgemäßen Folien enthaltend die erfindungsgemäßen Polymerzusammensetzungen, die erfindungsgemäßen Faserverbundhalbzeuge enthaltend die erfindungsgemäßen Polymerzusammensetzungen und das erfindungsgemäße Verfahren zur Herstellung des Faserverbundhalbzeugs werden nachfolgend beispielhaft beschrieben. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25°C ermittelt.

### Allgemeine Vorschrift zur Herstellung der Polymerzusammensetzung

In einem Extruder wurden haftvermittelnden Additive der Formel (I)

MₐM'_{b}D_{c}D'_{d} (I)

mit
- M =: [R₃SiO_{1/2}]
- M' =: [R'R₂SiO_{1/2}]
- D =: [R₂SiO_{2/2}]
- D' =: [R'RSiO_{2/2}]
wobei jedes R für Methyl steht und
R' ein Glycidyloxypropyl-Rest der Formel (II) ist 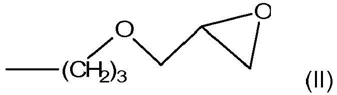 entweder direkt durch Flüssigdosierung Polyamiden (Polyamid 6 oder Polyamid 6,6) zugesetzt oder als Masterbatch in fester Form zugeführt.

Im Falle einer Flüssigdosierung (zum Beispiel von der Firma Movacolor, NL) wurden die Additive im ersten Drittel der Extrusionsstrecke homogen eingemischt (0,1 bis 20 Gew.% bezogen auf das Gesamtgewicht der Polymerzusammensetzung). Bei hochviskosen Additiven wurde alternativ eine Pumpe mit beheizbarer Zuleitung und beheizbarem Vorlagegefäß verwendet.

Alternativ wurden 50 %ige Masterbatche der Additive in Polyamid hergestellt. Die Masterbatche wurden mit einem separaten Feeder in den Haupteinzug der Extrusionsstrecke dosiert, wo auch das entsprechende Polyamid zugeführt wurde.

**Tab. 1: Verwendete Additive gemäß Formel (I)**

| | a | b | c | d |
|---|---|---|---|---|
| OMS 1 | 0 | 2 | 18 | 0 |
| OMS 2 | 2 | 0 | 89 | 7 |
| OMS 3 | 2 | 0 | 43 | 5 |
| OMS 4 | 2 | 0 | 73 | 25 |
| OMS 5 | 0 | 2 | 16 | 2 |

Das Temperaturprofil im Extruder entsprach der Empfehlung des Herstellers des entsprechenden Polyamids. Gegebenenfalls wurden die Polyamide vorgetrocknet, wenn der Feuchtegehalt oberhalb 0,1 Gew.% lag. Die Polymerzusammensetzungen wurden mit einer Maschinenleistung von 3 - 10 kg pro Stunde in Abhängigkeit vom Füllgrad und Polymer verarbeitet.

### Prüfung der erfindungsgemäßen Polymerzusammensetzungen

Die Güte der Verteilung der verwendeten Additiven in den Polyamiden wurde direkt am Strangbild bei Austritt aus dem Extruderkopf beurteilt. Bildete sich ein homogener Strang ohne Blasen, ohne Abriss des Strangs und ohne Variation der Dicke des Strangs um mehr als 20 %, wurde von einer homogenen Verteilung des Additives im Polyamid ausgegangen. In den nachgenannten Ausführungsbeispielen wurde dieser Zustand als "OK" gekennzeichnet.

**Tab. 2: Polymerzusammensetzung auf Basis von Polyamid 6 (PA6) und Polyamid 6,6 (PA6,6)**

| Zusammensetzung | 0,1% | 0,5% | 1% | 2% | 4% | 10% | 20% |
|---|---|---|---|---|---|---|---|
| PA6 / OMS 1 | OK | OK | OK | OK | OK | OK | OK |
| PA6 / OMS 2 | OK | OK | OK | OK | OK | OK | OK |
| PA6 / OMS 3 | | OK | | OK | OK | OK | |
| PA6 / OMS 4 | | OK | | OK | OK | OK | |
| PA6 / OMS 5 | | OK | | OK | OK | OK | |
| | | | | | | | |

| Zusammensetzung | 2% | 4% | 6% | 8% | 10% | | |
|---|---|---|---|---|---|---|---|
| PA6 / OMS MB 1 | OK | OK | OK | OK | OK | | |
| PA6 / OMS MB 2 | OK | OK | OK | OK | OK | | |
| PA6 / OMS MB 3 | | OK | | OK | | | |
| PA6 / OMS MB 4 | | OK | | OK | | | |
| PA6 / OMS MB 5 | | OK | | OK | | | |
| | | | | | | | |

| Zusammensetzung | 0,5% | 1% | 2% | 4% | 10% | | |
|---|---|---|---|---|---|---|---|
| PA6,6 / OMS 1 | OK | OK | OK | OK | OK | | |
| PA6,6 / OMS 2 | OK | OK | OK | OK | OK | | |

MB bedeutet Dosierung als Masterbatch, kein Zusatz bedeutet Dosierung als Flüssigdosierung; keine Angabe bedeutet, dass diese Zusammensetzungen nicht hergestellt wurden. Alle angefertigten Polymerzusammensetzung erfüllten alle oben genannten Qualitätskriterien.

### Folienherstellung

Es wurden Folien im Gießverfahren, also sogenannte Cast Folien mit einer Schichtdicke von 50 bis 600 µm hergestellt (Cast Film Anlage der Firma Collin). Die Qualität der Folien wurde durch Messung und Vergleich der Schichtdicke in verschiedenen Bereichen der Folie beurteilt, wobei eine Variation der Schichtdicke von weniger als 15 % in den nachfolgenden Anwendungsbeispielen als OK bezeichnet wurde.

Zur Bestimmung der Dicke wurde an 5 willkürlich und zufällig gewählten Stellen eines Probestückes von 30 cm mal 30 cm aus der Mitte des Materials die Dicke der Folie mit Hilfe einer digitalen Bügelmessschraube der Firma Mitutoyo bei einer Schließkraft von 7 bis 9 Newton bestimmt

Es ist nicht erforderlich, dass die resultierende Folie aus der Polymerzusammensetzung transparent ist, sie kann vielmehr ein opakes Erscheinungsbild haben.

**Tab. 3: Folien - Polymerzusammensetzung und Schichtdicke**

| | Folienschichtdicke in µm | | | | | |
|---|---|---|---|---|---|---|
| Polymerzusammensetzung | 50 | 100 | 150 | 250 | 400 | 600 |
| PA6 / 0,5% OMS 1 | OK | OK | OK | OK | OK | |
| PA6 / 2% OMS 1 | OK | OK | OK | OK | OK | OK |
| PA6 / 4% OMS 1 | OK | OK | OK | OK | OK | |
| PA6 / 10% OMS 1 | OK | OK | OK | OK | | |
| PA6 / 0,5% OMS 2 | OK | OK | OK | OK | OK | OK |
| PA6 / 2% OMS 2 | OK | OK | OK | OK | OK | OK |
| PA6 / 4% OMS 2 | OK | OK | OK | OK | OK | |
| PA6 / 10% OMS 2 | OK | OK | OK | OK | OK | |
| PA6 / 2% OMS MB 2 | OK | OK | OK | OK | OK | OK |
| PA6 / 4% OMS MB 2 | OK | OK | OK | OK | | |

Nicht angegebene Werte bedeuten, dass diese Folien nicht hergestellt wurden. Es ist ersichtlich, dass alle angefertigten Folien die genannten Qualitätskriterien erfüllten.

### Herstellung eines Faserverbundhalbzeugs auf Basis einer Folie

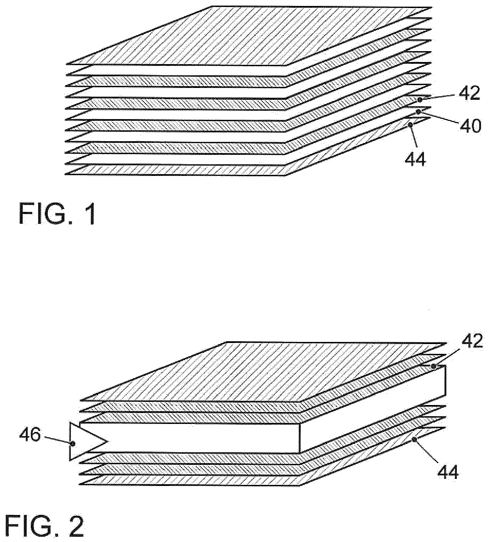

Die gefertigten Folien wurden zu Faserverbundhalbzeugen nach dem Film-Stacking-Verfahren oder Schmelze-Direkt-Verfahren weiterverarbeitet. Figur 1 illustriert dabei schematisch den Aufbau des Faserverbundhalbzeugs beim Film-Stacking-Verfahren und Figur 2 beim Schmelze-Direkt-Verfahren.

Die Ausgestaltung der Anlagentechnik zur Durchführung der beiden Verfahren ist hinreichend bekannt und umfasst Einheiten zur Materialzuführung, eine Intervall-Presseinheit mit Imprägnier- und Verbundstrecke sowie nachgeschaltet ein Walzwerk und ein Konfektioniereinheit. Die Materialzuführung beinhaltet Rollenhalterungen für die einzelnen in den jeweiligen Verfahren eingesetzten Polyamidfolien und Textilhalbzeuge, wie Gewebe oder Gelege. Im Falle des Schmelze-Direkt-Verfahrens ist zudem eine Plastifiziereinheit für die Direktimprägnierung mit Kunststoffschmelzen vorhanden. Die Imprägnier- und Verbundstrecke, in der die zugeführten Folien, Textilhalbzeuge und ggf. Schmelzen zusammengeführt werden, ist durch die Intervall-Presseinheit vorgegeben. Derartige Anlagen sind hinreichend bekannt, siehe beispielsweise Publikationen der Firma Neue Materialien Fürth GmbH.

Figur 1 ist exemplarisch eine Abfolge alternierender Lagen aus den verschiedener Materialien zu entnehmen, wie sie zur Herstellung eines Faserverbundhalbzeugs nach dem Film-Stacking-Verfahren Verwendung finden kann. Zur Bereitstellung des Matrixmaterials werden gemäß diesem Ausführungsbeispiel insgesamt fünf Matrixfolien 40 der Intervall-Presseinheit zugeführt. Jede Matrixfolie 40 besteht aus Polyamid, insbesondere Polyamid 6. Vier Lagen eines Verstärkungshalbzeugs 42 werden alternierend zwischen den Matrixfolien 40 angeordnet. Das Verstärkungshalbzeug 42 beinhaltet die zur Verstärkung dienenden Fasern. Mögliche Fasertypen sind dabei beispielsweise Glasfasern, Kohlenstofffasern oder Aramidfasern. Mögliche Verstärkungshalbzeugtypen umfassen Gelege und Gewebe. Schließlich wird im Randbereich des dargestellten Schichtstapels jeweils eine modifizierte Randfolie 44 aus der erfindungsgemäßen Polymerzusammensetzung bereitgestellt.

Auch beim Schmelze-Direkt-Verfahren werden Lagen aus Verstärkungshalbzeug 42 und modifizierter Randfolie 44 in der in Figur 2 dargestellten Abfolge der Intervall-Presseinheit zugeführt. Darüber hinaus wird über eine Plastifiziereinheit eine Kunststoffschmelze 46 aus Polyamid, insbesondere Polyamid 6, zugeführt.

Der in den Figuren 1 und 2 dargestellte Aufbau, insbesondere Schichtabfolge und Anzahl der Lagen aus Verstärkungshalbzeug 42 und Matrixfolie 40 ist variabel und kann den jeweiligen Erfordernissen angepasst werden. Für die Zwecke der Erfindung von Bedeutung ist lediglich, dass einseitig oder beidseitig eine Randschichtmodifikation des Faserverbundhalbzeugs durch Kaschieren mit der modifizierten Randfolie 44 aus der erfindungsgemäßen Polymerzusammensetzung erfolgt.

### Herstellverfahren eines Faserverbundhalbzeugs ohne Folienherstellung

Eine weitere Möglichkeit der Herstellung eines randschichtmodifizierten Faserverbundhalbzeugs ohne vorherige Folienherstellung ist das Doppelbandpressverfahren. Hierbei werden eine oder mehrere Lagen eines trockenen (nicht imprägnierten) endlosfaserverstärkten Faserverbundhalbzeugs in eine Doppelbandpresse eingezogen. Im Zwickelbereich zwischen den Einzellagen wird - analog zum Schmelze-Direkt-Verfahren - das Matrixmaterial vorzugsweise über eine Breitschlitzdüse auf das trockene Textil aufgebracht.

## Patentansprüche

1. Polymerzusammensetzung, enthaltend
a) 100 Gewichtsteile eines Polyamids;
b) 0,5 bis 20 Gewichtsteile eines oder mehrerer haftvermittelnder Additive der Formel (I):
MₐM'_{b}D_{c}D'_{d} (I)
mit
M = [R₃SiO_{1/2}]
M' = [R'R₂SiO_{1/2}]
D = [R₂SiO_{2/2}]
D' = [R'RSiO_{2/2}]
wobei jedes R unabhängig voneinander für Methyl oder Phenyl steht und
R' ein Glycidyloxypropyl-Rest der Formel (II) ist 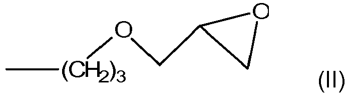 und wobei für die Indizes gilt
a = 0 bis 2
b = 0 bis 2
c = 15 bis 100
d = 0 bis 50
a + b = 2 und
b + d ≥ 2,
wobei ein Verhältnis der Summe der Indizes a + c zur Summe der Indizes b + d im Bereich von 4 bis 20 liegt.

2. Polymerzusammensetzung nach Anspruch 1, **dadurch gekennzeichnet, dass** R für Methyl steht.

3. Polymerzusammensetzung nach Anspruch 1 oder 2, **dadurch gekennzeichnet, dass** ein Verhältnis der Summe der Indizes a + c zur Summe der Indizes b + d im Bereich von 5 bis 15 liegt.

4. Polymerzusammensetzung nach einem der vorhergehenden Ansprüche, **dadurch gekennzeichnet, dass** für Index c gilt: c = 20 bis 50.

5. Polymerzusammensetzung nach einem der vorhergehenden Ansprüche, **dadurch gekennzeichnet, dass**
(i) für den Fall, dass b = 2 ist, für Index d gilt: d = 0 bis 20, insbesondere d = 1 bis 10; und
(ii) für den Fall, dass b = 0 ist, für Index d gilt: d = 2 bis 20, insbesondere d = 3 bis 10.

6. Polymerzusammensetzung nach einem der vorhergehenden Ansprüche, **dadurch gekennzeichnet, dass** die Polymerzusammensetzung 0,5 bis 5 Gewichtsteile des haftvermittelnden Additivs enthält.

7. Polymerzusammensetzung einem der vorhergehenden Ansprüche, **dadurch gekennzeichnet, dass** das Polyamide ausgewählt ist aus der Gruppe umfassend Polyamid 6, Polyamid 12 und Polyamid 6,6.

8. Polymerzusammensetzung nach Anspruch 7, **dadurch gekennzeichnet, dass** das Polyamid Polyamid 6 ist.

9. Faserverbundhalbzeug auf Basis von Polyamid, **dadurch gekennzeichnet, dass** zumindest ein Teil der Oberfläche des Halbzeugs aus einer Polymerzusammensetzung geformt ist, enthaltend
a) 100 Gewichtsteile eines Polyamids;
b) 0,5 bis 20 Gewichtsteile eines oder mehrerer haftvermittelnder Additive der Formel (I):
MₐM'_{b}D_{c}D'_{d} (I)
mit
M = [R₃SiO_{1/2}]
M' = [R'R₂SiO_{1/2}]
D = [R₂SiO_{2/2}]
D' = [R'RSiO_{2/2}]
wobei jedes R unabhängig voneinander für Methyl oder Phenyl steht und
R' ein Glycidyloxypropyl-Rest der Formel (II) ist 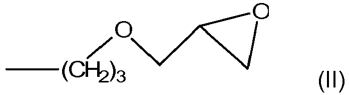 und wobei für die Indizes gilt
a = 0 bis 2
b = 0 bis 2
c = 10 bis 500
d = 0 bis 50
a + b = 2 und
b + d ≥ 2.

10. Folie enthaltend eine Polymerzusammensetzung, **dadurch gekennzeichnet, dass** die Polymerzusammensetzung
a) 100 Gewichtsteile eines Polyamids;
b) 0,5 bis 20 Gewichtsteile eines oder mehrerer haftvermittelnder Additive der Formel (I):
MₐM'_{b}D_{c}D'_{d} (I)
mit
M = [R₃SiO_{1/2}]
M' = [R'R₂SiO_{1/2}]
D = [R₂SiO_{2/2}]
D' = [R'RSiO_{2/2}]
wobei jedes R unabhängig voneinander für Methyl oder Phenyl steht und
R' ein Glycidyloxypropyl-Rest der Formel (II) ist 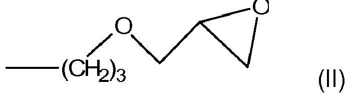 und wobei für die Indizes gilt
a = 0 bis 2
b = 0 bis 2
c = 10 bis 500
d = 0 bis 50
a + b = 2 und
b + d ≥ 2 enthält und
die Folie zwischen 10 µm und 600 µm dick ist.

11. Folie nach Anspruch 10, **dadurch gekennzeichnet, dass** die Folie an ihrer Grenzfläche beiderseitig je eine Zone aufweist, in der das haftvermittelnde Additiv der Formel (I) angereichert ist.

12. Verfahren zur Herstellung eines Faserverbundhalbzeugs, umfassend die Schritte:
a) Bereitstellen einer Polymerzusammensetzung, enthaltend
a) 100 Gewichtsteile eines Polyamids;
b) 0,5 bis 20 Gewichtsteile eines oder mehrerer haftvermittelnder Additive der Formel (I):
MₐM'_{b}D_{c}D'_{d} (I)
mit
M = [R₃SiO_{1/2}]
M' = [R'R₂SiO_{1/2}]
D = [R₂SiO_{2/2}]
D' = [R'RSiO_{2/2}]
wobei jedes R unabhängig voneinander für Methyl oder Phenyl steht und
R' ein Glycidyloxypropyl-Rest der Formel (II) ist 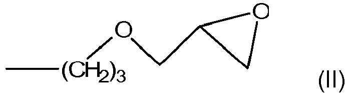 und wobei für die Indizes gilt
a = 0 bis 2
b = 0 bis 2
c = 10 bis 500
d = 0 bis 50
a + b = 2 und
b + d ≥ 2;
b) Herstellen einer Folie aus der Polymerzusammensetzung; und
c) Verarbeiten der Folie im Fertigungsprozess des Faserverbundhalbzeugs nach dem Film-Stacking-Verfahren oder dem Schmelze-Direkt-Verfahren oder durch Kaschieren.

13. Faserverbundhalbzeug, erhältlich durch das Verfahren nach Anspruch 12.

## Claims

1. Polymer composition comprising
a) 100 parts by weight of a polyamide;
b) 0.5 to 20 parts by weight of one or more adhesion-promoting additives of the formula (I):
MₐM'_{b}D_{c}D'_{d} (I)
with
M = [R₃SiO_{1/2}]
M' = [R'R₂SiO_{1/2}]
D = [R₂SiO_{2/2}]
D' = [R'RSiO_{2/2}]
where each R is independently methyl or phenyl and
R' is a glycidyloxypropyl radical of the formula (II) 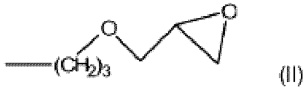 and where the indices are as follows:
a = 0 to 2
b = 0 to 2
c = 15 to 100
d = 0 to 50
a + b = 2 and
b + d ≥ 2,
where a ratio of the sum total of the indices a + c to the sum total of the indices b + d is in the range from 4 to 20.

2. Polymer composition according to Claim 1, **characterized in that** R is methyl.

3. Polymer composition according to Claim 1 or 2, **characterized in that** a ratio of the sum total of the indices a + c to the sum total of the indices b + d is in the range from 5 to 15.

4. Polymer composition according to any of the preceding claims, **characterized in that** the index c is: c = 20 to 50.

5. Polymer composition according to any of the preceding claims, **characterized in that**
(i) if b = 2, index d is: d = 0 to 20, especially d = 1 to 10; and
(ii) if b = 0, index d is: d = 2 to 20, especially d = 3 to 10.

6. Polymer composition according to any of the preceding claims, **characterized in that** the polymer composition contains 0.5 to 5 parts by weight of the adhesion-promoting additives.

7. Polymer composition according to any of the preceding claims, **characterized in that** the polyamide is selected from the group comprising nylon-6, nylon 12 and nylon-6,6.

8. Polymer composition according to Claim 7, **characterized in that** the polyamide is nylon-6.

9. Semifinished fibre composite product based on polyamide, **characterized in that** at least part of the surface of the semifinished product is formed from a polymer composition comprising
a) 100 parts by weight of a polyamide;
b) 0.5 to 20 parts by weight of one or more adhesion-promoting additives of the formula (I):
MₐM'_{b}D_{c}D'_{d} (I)
with
M = [R₃SiO_{1/2}]
M' = [R'R₂SiO_{1/2}]
D = [R₂SiO_{2/2}]
D' = [R'RSiO_{2/2}]
where each R is independently methyl or phenyl and
R' is a glycidyloxypropyl radical of the formula (II) 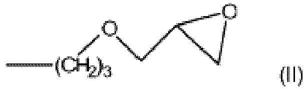 and where the indices are as follows:
a = 0 to 2
b = 0 to 2
c = 10 to 500
d = 0 to 50
a + b = 2 and
b + d ≥ 2.

10. Film comprising a polymer composition, **characterized in that** the polymer composition comprises
a) 100 parts by weight of a polyamide;
b) 0.5 to 20 parts by weight of one or more adhesion-promoting additives of the formula (I):
MₐM'_{b}D_{c}D'_{d} (I)
with
M = [R₃SiO_{1/2}]
M' = [R'R₂SiO_{1/2}]
D = [R₂SiO_{2/2}]
D' = [R'RSiO_{2/2}]
where each R is independently methyl or phenyl and
R' is a glycidyloxypropyl radical of the formula (II) 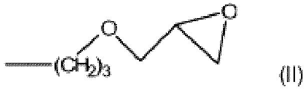 and where the indices are as follows:
a = 0 to 2
b = 0 to 2
c = 10 to 500
d = 0 to 50
a + b = 2 and
b + d ≥ 2, and
the film has a thickness between 10 µm and 600 µm.

11. Film according to Claim 10, **characterized in that** the film has a zone in which the adhesion-promoting additive of the formula (I) is enriched on either side of its interface.

12. Process for producing a semifinished fibre composite product, comprising the steps of:
a) providing a polymer composition comprising
a) 100 parts by weight of a polyamide;
b) 0.5 to 20 parts by weight of one or more adhesion-promoting additives of the formula (I) :
MₐM'_{b}D_{c}D'_{d} (I)
with
M = [R₃SiO_{1/2}]
M' = [R'R₂SiO_{1/2}]
D = [R₂SiO_{2/2}]
D' = [R'RSiO_{2/2}]
where each R is independently methyl or phenyl and
R' is a glycidyloxypropyl radical of the formula (II) 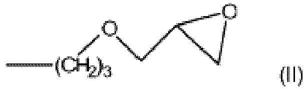 and where the indices are as follows:
a = 0 to 2
b = 0 to 2
c = 10 to 500
d = 0 to 50
a + b = 2 and
b + d ≥ 2;
b) producing a film from the polymer composition; and
c) processing the film in the process of manufacturing the semifinished fibre composite product by the film stacking method or the direct melt method or by laminating.

13. Semifinished fibre composite product obtainable by the process according to Claim 12.

## Revendications

1. Composition polymère, contenant :
a) 100 parties en poids d'un polyamide ;
b) 0,5 à 20 parties en poids d'un ou de plusieurs additifs promoteurs d'adhésion de la formule (I) :
MₐM'_{b}D_{c}D'_{d} (I)
avec
M = [R₃SiO_{1/2}]
M' = [R'R₂SiO_{1/2}]
D = [R₂SiO_{2/2}]
D' = [R'RSiO_{2/2}]
chaque R représentant indépendamment les uns des autres méthyle ou phényle, et
R' étant un radical glycidyloxypropyle de la formule (II) : 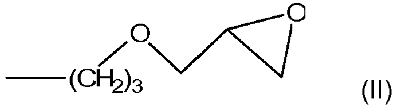 et pour les indices :
a = 0 à 2
b = 0 à 2
c = 15 à 100
d = 0 à 50
a + b = 2 et
b + d ≥ 2,
un rapport entre la somme des indices a + c et la somme des indices b + d se situant dans la plage allant de 4 à 20.

2. Composition polymère selon la revendication 1, **caractérisée en ce que** R représente méthyle.

3. Composition polymère selon la revendication 1 ou 2, **caractérisée en ce qu'**un rapport entre la somme des indices a + c et la somme des indices b + d se situe dans la plage allant de 5 à 15.

4. Composition polymère selon l'une quelconque des revendications précédentes, **caractérisée en ce que** pour l'indice c : c = 20 à 50.

5. Composition polymère selon l'une quelconque des revendications précédentes, **caractérisée en ce que**
(i) dans le cas où b = 2, pour l'indice d : d = 0 à 20, notamment d = 1 à 10 ; et
(ii) dans le cas où b = 0, pour l'indice d : d = 2 à 20, notamment d = 3 à 10.

6. Composition polymère selon l'une quelconque des revendications précédentes, **caractérisée en ce que** la composition polymère contient 0,5 à 5 parties en poids de l'additif promoteur d'adhésion.

7. Composition polymère selon l'une quelconque des revendications précédentes, **caractérisée en ce que** le polyamide est choisi dans le groupe comprenant le polyamide 6, le polyamide 12 et le polyamide 6,6.

8. Composition polymère selon la revendication 7, **caractérisée en ce que** le polyamide est le polyamide 6.

9. Produit semi-fini composite fibreux à base de polyamide, **caractérisé en ce qu'**au moins une partie de la surface du produit semi-fini est formée à partir d'une composition polymère, contenant :
a) 100 parties en poids d'un polyamide ;
b) 0,5 à 20 parties en poids d'un ou de plusieurs additifs promoteurs d'adhésion de la formule (I) :
MₐM'_{b}D_{c}D'_{d} (I)
avec
M = [R₃SiO_{1/2}]
M' = [R'R₂SiO_{1/2}]
D = [R₂SiO_{2/2}]
D' = [R'RSiO_{2/2}]
chaque R représentant indépendamment les uns des autres méthyle ou phényle, et
R' étant un radical glycidyloxypropyle de la formule (II) : 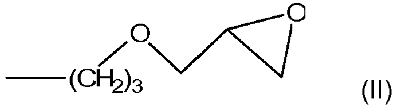 et pour les indices :
a = 0 à 2
b = 0 à 2
c = 10 à 500
d = 0 à 50
a + b = 2 et
b + d ≥ 2.

10. Feuille contenant une composition polymère, **caractérisée en ce que** la composition polymère contient :
a) 100 parties en poids d'un polyamide ;
b) 0,5 à 20 parties en poids d'un ou de plusieurs additifs promoteurs d'adhésion de la formule (I) :
MₐM'_{b}D_{c}D'_{d} (I)
avec
M = [R₃SiO_{1/2}]
M' = [R'R₂SiO_{1/2}]
D = [R₂SiO_{2/2}]
D' = [R'RSiO_{2/2}]
chaque R représentant indépendamment les uns des autres méthyle ou phényle, et
R' étant un radical glycidyloxypropyle de la formule (II) : 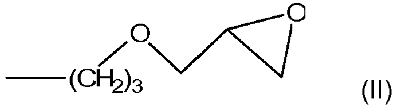 et pour les indices :
a = 0 à 2
b = 0 à 2
c = 10 à 500
d = 0 à 50
a + b = 2 et
b + d ≥ 2, et
la feuille a une épaisseur comprise entre 10 µm et 600 µm.

11. Feuille selon la revendication 10, **caractérisée en ce que** la feuille comprend au niveau de son interface des deux côtés à chaque fois une zone dans laquelle l'additif promoteur d'adhésion de la formule (I) est concentré.

12. Procédé de fabrication d'un produit semi-fini composite fibreux, comprenant les étapes suivantes :
a) la préparation d'une composition polymère, contenant :
a) 100 parties en poids d'un polyamide ;
b) 0,5 à 20 parties en poids d'un ou de plusieurs additifs promoteurs d'adhésion de la formule (I) :
MₐM'_{b}D_{c}D'_{d} (I)
avec
M = [R₃SiO_{1/2}]
M' = [R'R₂SiO_{1/2}]
D = [R₂SiO_{2/2}]
D' = [R'RSiO_{2/2}]
chaque R représentant indépendamment les uns des autres méthyle ou phényle, et
R' étant un radical glycidyloxypropyle de la formule (II) : 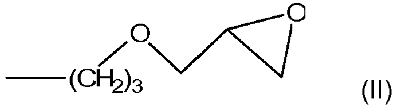 et pour les indices :
a = 0 à 2
b = 0 à 2
c = 10 à 500
d = 0 à 50
a + b = 2 et
b + d ≥ 2 ;
b) la fabrication d'une feuille à partir de la composition polymère ; et
c) l'usinage de la feuille dans le procédé de production du produit semi-fini composite fibreux selon le procédé d'empilement de film ou le procédé direct en masse fondue ou par contre-collage.

13. Produit semi-fini composite fibreux, pouvant être obtenu par le procédé selon la revendication 12.
